# FASCICULE DE BREVET EUROPEEN

(11) **EP 2 410 637 B1**
(45) Date de publication et mention de la délivrance du brevet: **14.09.2016**
(21) Numéro de dépôt: 11174766.3
(22) Date de dépôt: 20.07.2011
(51) Int. Cl.: H02K 5/128, H02K 3/52, H02K 7/14, H02K 1/14, H02K 5/22

(54) **Stator et procede d'assemblage de stator**
Ständer und Herstellungsverfahren
Stator and method for assembling a stator

(30) Priorité: 23.07.2010 FR 1056027
(43) Date de publication de la demande: 25.01.2012
(73) Titulaire: Pompes Salmson, 78400 Chatou (FR)
(72) Inventeur: Bouilly, Herve, 53940 Le Genest St. L'Isle (FR); Signori, Gilles, 35740 Pace (FR); Leze, Adrien, 53940 St. Berthevin (FR)
(74) Mandataire: Hirsch & Associés

(56) Documents cités:
- WO-A1-01/91266
- DE-A1-102008 019 608
- DE-U1-202009 003 756
- US-A- 5 861 689
- US-A1- 2006 087 192

## Description

La présente invention concerne un stator, et un procédé d'assemblage de stator. Un tel stator est par exemple destiné à être utilisé dans une pompe de circulation de fluides.

Les pompes de circulation de fluides connues comportent généralement un stator, relié à une alimentation électrique et muni d'un passage central dans lequel est logé un rotor. Le rotor se présente sous la forme d'une cartouche contenant des aimants, et qui est en rotation dans le passage central. La cartouche est fixée par une de ses deux extrémités à une extrémité du passage central. L'ensemble est alors consolidé dans une carcasse. La cartouche est étanche de sorte que l'eau entraînée par la pompe et circulant dans le rotor n'endommage pas l'alimentation électrique du stator. Le matériau utilisé pour la cartouche a longtemps été l'inox. Afin d'éviter les pertes entrefers et ainsi obtenir un meilleur rendement, des cartouches en matériau plastique sont de plus en plus utilisées. Ces cartouches présentent en cours d'utilisation de la pompe une tendance à la déformation axiale importante. Une déformation axiale de la cartouche entraîne un risque de rupture de la cartouche, et par conséquent un risque de fuite du fluide contenu dans la cartouche qui peut alors endommager le stator.

Plusieurs solutions existent qui permettent d'éviter cette déformation axiale de la cartouche lors de l'utilisation de la pompe. Par exemple, on connaît des pompes dont la carcasse est surmoulée, ou des pompes avec une carcasse fermée. Ces carcasses constituent une butée à une extrémité de la cartouche et préviennent ainsi la déformation axiale de la cartouche. Cependant, ces solutions sont compliquées car les dimensions de la carcasse doivent être parfaitement adaptées. En outre elles sont coûteuses car une grande quantité de matériau est utilisée pour la carcasse. Il existe donc un besoin pour une solution qui permette de prévenir la déformation axiale de la cartouche qui soit peu coûteuse et simple.

Dans l'art antérieur, US 2006/087192 A1 divulgue un appareil pour fixer une bobine d'une machine à réluctance et WO 01/91266 A1 divulgue un stator comprenant une pile de tôles laminées.

Pour cela, il est proposé un stator comprenant un passage central le long d'un axe; des supports de bobine autour du passage central ; et une coupelle obturant une extrémité du passage central, la coupelle étant solidarisée aux supports de bobines, en translation le long de l'axe, par des organes de solidarisation en translation. Les organes de solidarisation sont des ergots sur les supports de bobines ou sur la coupelle, coopérant avec des évidements sur l'autre des supports de bobines ou coupelle.

Suivant des modes de réalisations préférés, le stator présente en outre l'une ou plusieurs des caractéristiques suivantes :
- les ergots sont radiaux ;
- les ergots présentent un épaulement ;
- les ergots sont sur les supports de bobines et les évidements sont sur la coupelle ;
- le stator comprend en outre une bague comportant sur sa périphérie des branches s'étendant radialement vers l'extérieur de la bague, les supports de bobines étant immobilisés autour du passage central par emboîtement des branches au travers des supports de bobines ;
- le stator comprend en outre un élément annulaire autour des supports de bobines, l'élément annulaire comportant des rainures dans lesquelles s'engagent les extrémités des branches au-delà des supports de bobine.

Suivant un autre aspect, il est proposé un ensemble comprenant le stator ci-dessus ; une carcasse ouverte autour du stator ; un rotor agencé dans le passage central du stator.

Suivant un mode de réalisation préféré, l'ensemble comprend en outre une cartouche dans le stator dans laquelle est logée le rotor, et un joint entre la cartouche et la coupelle.

Suivant un autre aspect, il est proposé une pompe de circulation de fluides comprenant l'ensemble ci-dessus.

Suivant un autre aspect, il est proposé un procédé d'assemblage d'un stator comprenant une étape de solidarisation, en translation le long d'un axe, d'une coupelle avec des supports de bobine par des organes de solidarisation. Les organes de solidarisation sont des ergots sur les supports de bobines ou sur la coupelle, coopérant avec des évidements sur l'autre des supports de bobines ou coupelle.

Suivant des modes de réalisations préférés, le procédé présente en outre l'une ou plusieurs des caractéristiques suivantes :
- les ergots sont radiaux et le procédé comprend l'enfichage des ergots dans les évidements ;
- le procédé comprend les étapes de fourniture d'une bague comportant des branches s'étendant radialement vers l'extérieur de la bague, emboîtement partiel des branches au travers des supports de bobine, l'étape de solidarisation des supports de bague avec la coupelle étant réalisée par emboîtement complet des branches au travers des supports de bobine ;
- l'étape de solidarisation des supports de bague avec la coupelle est réalisée par emboîtement complet des branches au travers des supports de bobine jusqu'à ce que les ergots soient enfichés dans les évidements ;
- le procédé comprend en outre une étape de bobinage des supports de bobines lorsque les branches sont partiellement emboîtées dans les supports de bobines.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe d'un exemple d'un stator selon l'invention ;
- figure 2, une vue en coupe longitudinale d'un ensemble comprenant le stator;
- figure 3, une vue en perspective d'un support de bobine du stator ;
- figures 4 à 6, des vues en perspective du stator.

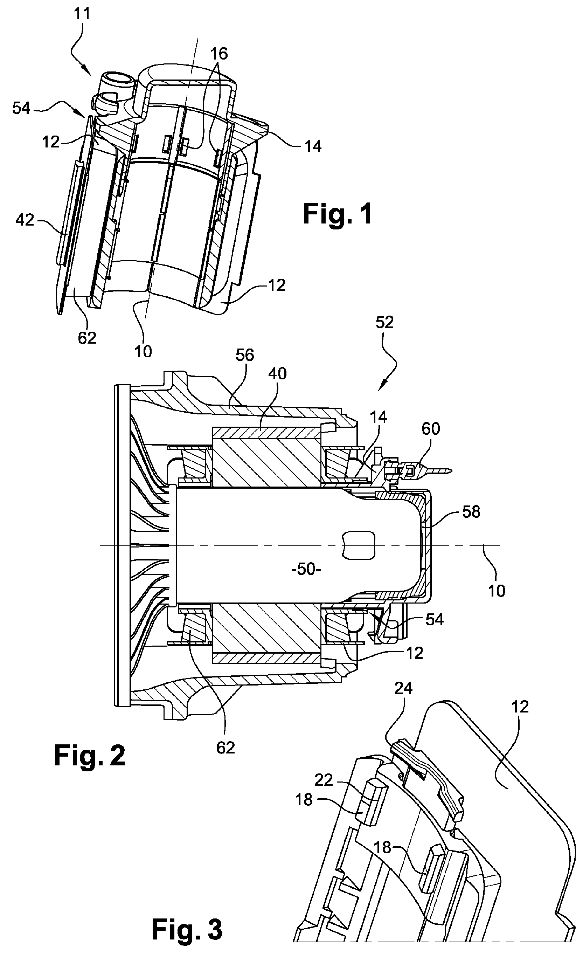

La figure 1 montre une vue en coupe d'un exemple de stator 11 selon l'invention. La figure 2 montre une vue en coupe longitudinale d'un exemple d'ensemble comprenant un tel stator 11. Le stator comprend un passage central le long d'un axe 10, des supports de bobine 12 autour du passage central, et une coupelle 14 obturant une extrémité 54 du passage central. La coupelle 14 est solidarisée aux supports de bobine 12, en translation le long de l'axe 10, par des organes de solidarisation 16 en translation. Comme cela est visible dans l'exemple de la figure 2, le stator peut être utilisé dans un ensemble 52 comprenant le stator 11 et une cartouche 50, susceptible d'être insérée dans le stator. Un rotor est introduit dans la cartouche et est entraîné en rotation par le stator. Un tel stator permet de prévenir la déformation axiale de la cartouche 50 lors de sa rotation.

Les supports de bobine 12 sont disposés autour de l'axe 10 et permettent ainsi la disposition de bobines 62 autour de la cartouche 50 logée dans le passage et du rotor dans la cartouche. Ces bobines 62, alimentées en courant, permettent de manière classique et connue d'assurer la fonction motrice de l'ensemble 52.

La coupelle 14 obture une extrémité 54 du passage central. La coupelle 14 étant solidarisée aux supports de bobine 12 en translation le long de l'axe 10, par des organes de solidarisation 16 en translation, elle constitue une butée en travers de l'axe 10 et limite ainsi la déformation axiale de la cartouche 50 lorsque le rotor est en fonctionnement, particulièrement au démarrage et à l'arrêt du rotor. Les organes de solidarisation 16 en translation permettent la rétention de la coupelle 14 le long de l'axe 10. Les organes de solidarisation permettent de fixer ensemble les supports de bobines et la coupelle.

Les dimensions du stator peuvent être telles que la cartouche 50 est en contact avec le fond de la coupelle 14. L'ensemble 52 peut en outre comprendre un joint 58 entre la cartouche 50 et la coupelle 14. Le joint 58 permet le positionnement de l'extrémité de la cartouche selon l'axe 10 dans la coupelle 14. Le joint peut en particulier être en matériau élastomère. Un tel joint 58 absorbe les chocs et les variations de forme de la cartouche.

Le stator permet ainsi une meilleure prévention de la déformation axiale de la cartouche 50 en rotation dans le passage central. Cette prévention est indépendante d'une éventuelle carcasse consolidant l'ensemble 52 comportant le stator et la cartouche. On peut donc utiliser les formes souhaitées pour la carcasse, dont la production sera ainsi simplifiée. Par exemple, l'ensemble 52 de la figure 2 comprend une carcasse ouverte 56 autour du stator. La carcasse 56 ouverte est sans fond à ses deux extrémités le long de l'axe 10. L'utilisation de cette carcasse 56, ouverte notamment au niveau de l'extrémité 54 du passage central, permet de réduire la consommation de matériau par rapport aux carcasses surmoulées ou fermées de l'art antérieur. Elle permet également un meilleur refroidissement du stator. Alternativement, la carcasse 56 peut être fermée à une extrémité, en particulier à l'extrémité 54 du passage central, et constituer ainsi un deuxième moyen de prévention de la déformation axiale de la cartouche.

La carcasse 56 peut être conçue pour être particulièrement résistante. Par exemple, la carcasse peut être constituée d'un bloc en fonte. Une telle carcasse est particulièrement coûteuse à produire. Dans ce cas, la production en grande série de telles carcasses bénéficiera d'autant plus de la configuration du stator de l'invention que la carcasse soit ouverte.

La coupelle 14 peut présenter des broches 60 en matériau conducteur électrique. Ces broches 60 permettent de brancher un boîtier de commande sur la coupelle 14, vers l'extérieur du stator. Les broches 60 sont dans ce cas reliées électriquement aux bobines 62 des supports de bobine 12. Une telle coupelle 14 permet le contrôle du courant traversant les bobines 62 par le biais des broches 64. Le fait que la carcasse 56 puisse être ouverte à l'extrémité accueillant la coupelle 14 permet d'éviter de prévoir une conformation particulière pour le passage des broches 60.

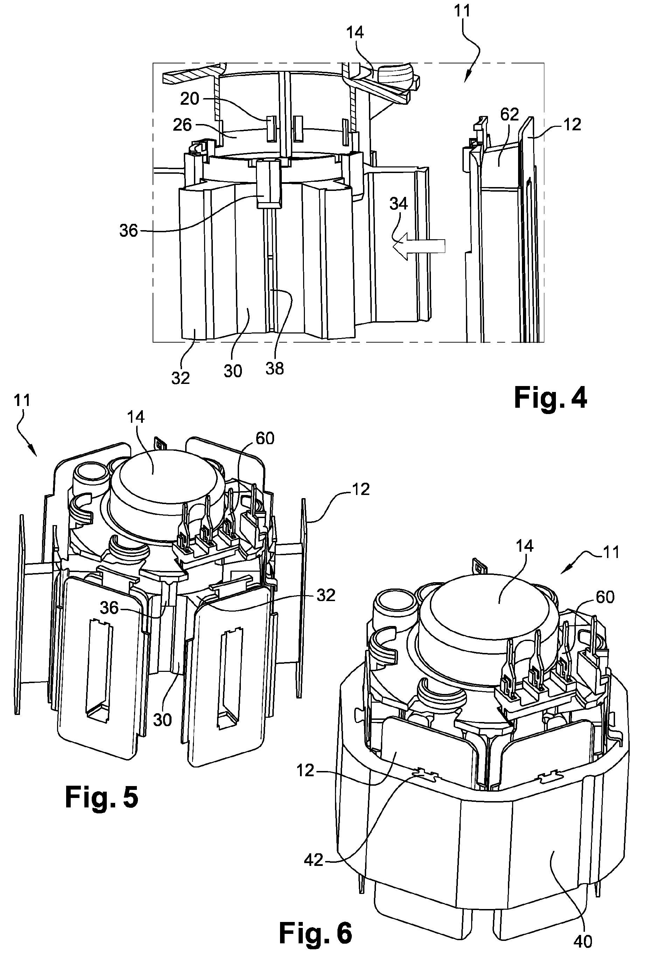

La figure 3 montre une vue en perspective d'un support de bobine 12 du stator de la figure 1. Dans cet exemple, les organes de solidarisation 16 comprennent des ergots 18 sur les supports de bobine 12. La figure 4 montre une vue en perspective le stator, où un seul support de bobine 12 est représenté et la coupelle 14 est en vue en coupe. Dans cet exemple, les organes de solidarisation 16 comprennent, en plus des ergots 18 des supports de bobine 12, des évidements 20 sur la coupelle 14. Dans un autre exemple non représenté, les ergots se situent sur la coupelle et les évidements sur les supports de bobine. Dans encore un autre exemple non représenté, aussi bien la coupelle que les supports de bobine comportent à la fois des évidements et des ergots. Dans tous ces exemples, les ergots coopèrent avec les évidements. Par exemple dans l'exemple des figures, les ergots 18 des supports de bobine 12 sont enfichés dans les évidements 20 de la coupelle. Comme on le voit sur les figures, les ergots 18 sont en effet radiaux, c'est-à-dire qu'ils s'étendent depuis les support de bobine 12 vers l'axe 10. Lorsqu'ils sont enfichés dans les évidements 20 (i.e. les ergots 18 radiaux traversent les évidements 20 jusqu'à déboucher dans le passage central), les ergots 18 exercent ainsi une force de retenue sur le pourtour des évidements 20 solidarisant ainsi la coupelle et les supports de bobine. Ainsi, même si la coupelle 14 est sollicitée le long de l'axe 10 vers l'extérieur du passage central, la coupelle 14 est retenue par les supports de bobine 12.

D'autres organes de solidarisation 16 peuvent être utilisés. Par exemple, les organes de solidarisation 16 peuvent être des points de soudure entre la coupelle 14 et les supports de bobine 12. On peut également utiliser des évidements de la coupelle 14 coopérant avec des évidements des supports de bobine 12, par l'intermédiaire d'un insert solidarisant en translation la coupelle 14 et les supports de bobine 12. L'exemple des figures où des ergots 18 coopèrent avec des évidements 20 présente l'avantage d'une fabrication industrielle simple, dans la mesure où les ergots 18 sont monoblocs avec les supports de bobine 12.

La coopération des évidements 20 et des ergots 18 peut consister simplement en une pénétration des ergots dans les évidements jusqu'à être en saillie dans le passage central. L'enfichage est alors réalisé très facilement. Les ergots 18 peuvent cependant présenter un épaulement 22, comme l'on voit sur la figure 3. L'épaulement 22 permet un enfichage des ergots 18 par clipsage dans les évidements 20. Le clipsage permet l'encastrement aisé des ergots 18 par une légère déformation, puis maintien en place une fois la forme initiale retrouvée. Cela augmente encore la solidarisation de la coupelle 14 aux supports de bobines 12.

Les supports de bobine 12 peuvent également présenter des moyens d'ajustement 24. Ces moyens d'ajustement 24 sont solidaires des supports de bobine 12. Les moyens d'ajustement 24 permettent de plaquer le fil des bobines 62 lors de l'emboîtement des supports de bobine 12. Le stator 11 peut présenter un jeu entre les moyens d'ajustement 24 et les parois d'un corps 26 de la coupelle. Cela permet le passage du fil des bobines 62. Dans l'exemple de la figure 4, ce corps 26 est de forme générale cylindrique.

Les supports de bobine 12 et/ou la coupelle peuvent être en matière plastique. Cela facilite le clipsage des ergots 18 dans les évidements 20. Cela permet également une réalisation facile par moulage.

La figure 5 montre une vue en perspective du stator des figures précédentes. Comme on le voit à travers les figures, le stator peut comprendre une bague 30 comportant sur sa périphérie des branches 32 s'étendant radialement vers l'extérieur de la bague 30. La bague 30 prend ainsi une forme étoilée. L'intérieur de la bague 30 délimite le passage central. Les supports de bobines 12 sont immobilisés autour du passage central par emboîtement des branches 32 au travers des supports de bobines 12. Sur la représentation de la figure 5, les branches 32 ne sont pas emboîtées dans les supports de bobine 12. La figure 4 représente par une flèche 34 la direction de cet emboîtement. La figure 1 montre un tel stator lorsque les branches 32 sont emboîtées. La bague 30 permet l'assemblage des éléments constitutifs du stator. Comme on le verra plus loin, la bague 30 permet également un procédé de fabrication plus simple, les branches 32 de la bague 30 permettant le guidage des ergots 18 des supports de bobine 12 dans les évidements 20 de la coupelle 14. En outre, les branches 32 peuvent être prévues pour être aimantées lors de la circulation de courant dans les bobines 62 autour des supports de bobine 12 et acquérir ainsi une fonction dans le fonctionnement électromagnétique du stator. A cet effet, la bague 30 peut être métallique.

Comme on peut le voir sur la figure 4 ou 5, la coupelle 14 peut présenter des pattes 36 coopérant avec la bague 30 dans des logements 38 de la bague 30 entre les branches 32. Cela permet de maintenir en position la coupelle 14 sur la bague 30 et de la bloquer en rotation lorsqu'elle est disposée sur la bague 30, ce qui facilite le guidage des ergots 18 dans les évidements 20.

La figure 6 montre un stator qui comprend en outre un élément annulaire 40 autour des supports de bobines 12. L'élément annulaire 40, également connu sous le terme de « yoke ring », permet de maintenir serrés les supports de bobine 12 autour du passage central.

L'élément annulaire 40 peut en outre comporter sur sa face intérieure des rainures dans lesquelles s'engagent les extrémités 42 des branches 32 qui s'étendent au-delà des supports de bobine 12. En effet, comme on le voit sur la figure 1, les branches 32 peuvent être prévues pour qu'une extrémité 42 dépasse du support de bobine 12 lorsque les branches 30 sont emboîtées dans les supports de bobine 12. Cela permet de bloquer l'élément annulaire 40 en rotation. En particulier, les extrémités des branches peuvent avoir une forme de queue d'aronde coopérant avec une forme adaptée des rainures de l'élément 40. Cela permet un meilleur maintien du stator. L'élément annulaire 40 peut être réalisé dans un matériau rigide, de préférence le même matériau que pour les branches 32. Il peut s'agir d'un matériau conducteur.

Comme décrit précédemment en référence à la figure 2, le stator peut être associé à un rotor logé dans la cartouche 50 et former ainsi un ensemble 52. Un tel ensemble 52 peut être utilisé comme moteur, notamment pour des systèmes de pompe, en particulier une pompe de circulation de fluides. Dans un tel exemple d'utilisation, la déformation axiale de la cartouche 50 peut entraîner une rupture et/ou des fissures et une fuite de fluides endommageant le stator. Le stator de l'invention permet d'éviter un tel endommagement et donc une telle fuite en prévenant la déformation axiale de la cartouche 50.

Dans un exemple particulier, le stator comprend entre quatre et huit supports de bobine 12, de préférence six supports de bobine. Chaque support de bobine 12 comprend entre un et quatre ergots 18, de préférence deux ergots 18. La coupelle 14 comprend un nombre d'évidements 20 correspondant au nombre total d'ergots 18. Cette configuration est particulièrement adaptée à l'utilisation du stator dans une pompe à eau et permet dans cette utilisation une bonne retenue de la coupelle 14 lorsque la coupelle 14 subit une contrainte axiale provenant de la cartouche 50.

Le stator précédemment décrit peut être obtenu par un procédé d'assemblage spécialement conçu pour cela. Un exemple d'un tel procédé va maintenant être décrit. Le procédé comprend de manière générale une étape de solidarisation, en translation le long de l'axe 10, de la coupelle 14 avec des supports de bobine 12 à l'aide des organes 16 de solidarisation. Les ergots 18 sont enfichés dans les évidements.

En particulier, le procédé peut comprendre la fourniture de la bague 30 comportant les branches 32 s'étendant radialement vers l'extérieur de la bague 30, et l'emboîtement partiel des branches 32 au travers des supports de bobine 12. Par exemple, l'emboîtement est réalisé à mi-profondeur des branches 32. L'emboîtement partiel permet le bobinage autour des supports de bobine 12. En effet, les fils conducteurs constituant les bobines 62 sont préalablement reliés aux broches 60 de la coupelle 14. Pour que le bobinage soit correctement réalisé, il ne faut pas que les supports de bobine 12 soient trop éloignés de la coupelle 14, auquel cas une longueur trop importante de fil découvert subsisterait entre la coupelle 14 et chaque support de bobine 12. En outre, le pré-positionnement des supports de bobine sur les branches 32 de la bague permet d'éviter la rupture du fil conducteur lors de l'assemblage définitif des supports de bobine sur la bague 30. De plus, l'emboîtement partiel permet d'offrir une place suffisante pour réaliser le bobinage. L'emboîtement partiel permet ainsi un bobinage correct.

Dans un tel cas, l'étape de solidarisation des supports de bobine 12 avec la coupelle 14 est alors réalisée ultérieurement par emboîtement complet des branches 32 au travers des supports de bobine 12.

Dans un exemple, les supports de bobines 12 comprennent des ergots 18 et la coupelle 14 comprend des évidements 20. L'étape de solidarisation des supports de bague 12 avec la coupelle 14 peut alors être réalisée par emboîtement complet des branches 32 au travers des supports de bobine 12 jusqu'à ce que les ergots 18 soient enfichés dans les évidements 20. Les ergots 18 étant radiaux, l'emboîtement des branches 32 au travers des supports de bobine 12 permet en effet l'enfichage des ergots 18 dans les évidements 20.

Dans le cas où les supports de bobine 12 présentent des moyens d'ajustement 24, lors de l'emboîtement complet des branches 32 au travers des supports de bobine 12, les moyens d'ajustement 24 peuvent embarquer le fil des bobines 62 et le plaquer. Cela évite que le fil ne soit flottant, ce qui comporte des risques, par exemple de coupure.

Dans un autre exemple, préalablement au bobinage de chaque support de bobine 12, le support de bobine 12 en cours de bobinage peut être reculé puis solidarisé à la coupelle 14. Cela facilite encore plus le bobinage.

Les étapes ci-dessus peuvent être suivies d'une étape d'insertion de l'élément annulaire 40 autour des supports de bobine 12. Le stator ainsi constitué peut alors être inséré dans la carcasse 56.

## Revendications

1. Un stator (11) comprenant :
- un passage central le long d'un axe (10) ;
- des supports (12) de bobines (62) autour du passage central ; et
- une coupelle (14) obturant une extrémité (54) du passage central, la coupelle (14) étant solidarisée aux supports (12) de bobines (62), en translation le long de l'axe (10), par des organes de solidarisation (16) en translation,
dans lequel les organes de solidarisation (16) sont des ergots (18) sur les supports de bobines ou sur la coupelle, enfichés dans des évidements (20) sur l'autre des supports de bobines ou coupelle, de sorte que, si la coupelle (14) est sollicitée le long de l'axe (10) vers l'extérieur du passage central, ladite coupelle est retenue par les supports (12) de bobines (62).

2. Le stator (11) selon la revendication 1, dans lequel les ergots (18) sont radiaux.

3. Le stator (11) selon la revendication 2, dans lequel les ergots (18) présentent un épaulement (22).

4. Le stator (11) selon la revendication 1, 2 ou 3, dans lequel les ergots (18) sont sur les supports (12) de bobines (62) et les évidements (20) sont sur la coupelle (14).

5. Le stator (11) selon l'une des revendications 1 à 4, comprenant en outre une bague (30) comportant sur sa périphérie des branches (32) s'étendant radialement vers l'extérieur de la bague, les supports (12) de bobines (62) étant immobilisés autour du passage central par emboîtement des branches au travers des supports de bobines.

6. Le stator (11) selon la revendication 5, comprenant en outre un élément annulaire (40) autour des supports (12) de bobines (62), l'élément annulaire comportant des rainures dans lesquelles s'engagent les extrémités (42) des branches (32) au-delà des supports de bobines.

7. Un ensemble (52) comprenant :
- un stator (11) selon l'une des revendications 1 à 6 ;
- une carcasse (56) ouverte autour du stator ;
- un rotor (50) agencé dans le passage central du stator.

8. L'ensemble selon la revendication 7, comprenant en outre une cartouche (50) dans le stator (11) dans laquelle est logée le rotor, et un joint (58) entre la cartouche et la coupelle.

9. Une pompe de circulation de fluides comprenant un ensemble (52) selon la revendication 7 ou 8.

10. Un procédé d'assemblage d'un stator (11) selon la revendication 1 comprenant une étape de solidarisation, en translation le long d'un axe, d'une coupelle (14) avec des supports (12) de bobines (62) par des organes de solidarisation, dans lequel les organes de solidarisation (16) sont des ergots (18) sur les supports de bobines ou sur la coupelle, enfichés dans des évidements (20) sur l'autre des supports de bobines ou coupelle, de sorte que , si la coupelle (14) est sollicitée le long de l'axe (10) vers l'extérieur du passage central, ladite coupelle est retenue par les supports (12) de bobines (62).

11. Le procédé selon la revendication 10, dans lequel les ergots (18) sont radiaux.

12. Le procédé selon la revendication 10 ou 11, comprenant les étapes de
- fourniture d'une bague (30) comportant des branches (32) s'étendant radialement vers l'extérieur de la bague ;
- emboîtement partiel des branches au travers des supports (12) de bobines (62), l'étape de solidarisation des supports (12) de bobines (62) avec la coupelle (14) étant réalisée par emboîtement complet des branches au travers des supports de bobines.

13. Le procédé selon la revendication 12, dans lequel l'étape de solidarisation des supports de bobines (62) avec la coupelle (14) est réalisée par emboîtement complet des branches (32) au travers des supports (12) de bobines (62) jusqu'à ce que les ergots (18) soient enfichés dans les évidements (20).

14. Le procédé selon l'une des revendications 10 à 13, comprenant en outre une étape de bobinage des supports (12) de bobines (62) lorsque les branches (32) sont partiellement emboîtées dans les supports de bobines.

## Patentansprüche

1. Ständer (11), umfassend:
- einen mittleren Durchgang entlang einer Achse (10) ;
- Träger (12) einer Spule (62) um den mittleren Durchgang; und
- eine Kappe (14), die ein Ende (54) des mittleren Durchgangs verschließt, wobei die Kappe (14) an den Trägern (12) von Spulen (62) translatorisch entlang der Achse (10) durch verschiebbare Befestigungsorgane (16) befestigt ist,
wobei die Befestigungsorgane (16) Stifte (18) auf den Spulenträgern oder auf der Kappe sind, die in Ausnehmungen (20) auf dem anderen der Spulenträger oder der Kappe derart gesteckt sind, so dass, wenn die Kappe (14) entlang der Achse (10) zur Außenseite des mittleren Durchgangs beansprucht wird, die Kappe von den Trägern (12) einer Spule (62) gehalten wird.

2. Ständer (11) nach Anspruch 1, wobei die Stifte (18) radial sind.

3. Ständer (11) nach Anspruch 2, wobei die Stifte (18) eine Schulter (22) aufweisen.

4. Ständer (11) nach Anspruch 1, 2 oder 3, wobei die Stifte (18) auf den Trägern (12) von Spulen (62) sind und die Ausnehmungen (20) auf der Kappe (14) sind.

5. Ständer (11) nach einem der Ansprüche 1 bis 4, ferner umfassend einen Ring (30), der auf seinem Umfang Schenkel (32) aufweist, die sich radial zur Außenseite des Rings erstrecken, wobei die Träger (12) von Spulen (62) um den mittleren Durchgang durch Einstecken der Schenkel durch die Spulenträger immobilisiert sind.

6. Ständer (11) nach Anspruch 5, ferner umfassend ein ringförmiges Element (40) um die Träger (12) von Spulen (62), wobei das ringförmige Element Nuten aufweist, in die die Enden (42) der Schenkel (32) über den Spulenträgern eingreifen.

7. Anordnung (52), umfassend:
- einen Ständer (11) nach einem der Ansprüche 1 bis 6;
- ein offenes Gehäuse (56) um den Ständer;
- einen Rotor (50), der in dem mittleren Durchgang des Ständers angeordnet ist.

8. Anordnung nach Anspruch 7, ferner umfassend eine Kartusche (50) in dem Ständer (11), in der der Rotor angeordnet ist, und eine Dichtung (58) zwischen der Kartusche und der Kappe.

9. Pumpe zum Zirkulieren von Flüssigkeiten, umfassend eine Anordnung (52) nach Anspruch 7 oder 8.

10. Herstellungsverfahren eines Ständers (11) nach Anspruch 1, umfassend einen Schritt des Befestigens, translatorisch entlang einer Achse, einer Kappe (14) mit den Trägern (12) einer Spule (62) durch Befestigungsorgane, wobei die Befestigungsorgane (16) Stifte (18) auf den Spulenträgern oder auf der Kappe sind, die in Ausnehmungen (20) auf dem anderen der Spulenträger oder der Kappe derart eingesteckt sind, dass, wenn die Kappe (14) entlang der Achse (10) zur Außenseite des mittleren Durchgangs beansprucht wird, die Kappe von den Trägern (12) einer Spule (62) gehalten wird.

11. Verfahren nach Anspruch 10, wobei die Stifte (18) radial sind.

12. Verfahren nach Anspruch 10 oder 11, umfassend die Schritte des
- Bereitstellens eines Rings (30), der Schenkel (32) aufweist, die sich radial zur Außenseite des Rings erstrecken;
- teilweisen Einsteckens der Schenkel durch die Träger (12) einer Spule (62),
wobei der Schritt des Befestigens der Träger (12) von Spulen (62) mit der Kappe (14) durch vollständiges Einstecken der Schenkel durch die Spulenträger durchgeführt wird.

13. Verfahren nach Anspruch 12, wobei der Schritt des Befestigens der Träger von Spulen (62) mit der Kappe (14) durch vollständiges Einstecken der Schenkel (32) durch die Träger (12) einer Spule (62) durchgeführt wird, bis die Stifte (18) in die Ausnehmungen (20) eingesteckt sind.

14. Verfahren nach einem der Ansprüche 10 bis 13, ferner umfassend einen Schritt des Wickelns der Träger (12) von Spulen (62), wenn die Schenkel (32) teilweise in den Spulenträgern eingesteckt sind.

## Claims

1. A stator (11) comprising:
- a central passage along an axis (10);
- supports (12) of windings (62) around the central passage; and
- a dish (14) closing off an end (54) of the central passage, the dish (14) being joined with the supports (12) of windings (62), in translation along the axis (10), by joining members (16) in translation,
in which the joining members (16) are spurs (18) on the supports of windings or on the dish, cooperating with recesses (20) on the other of said supports of windings or dish, so that, if the dish (14) is urged along the axis (10) towards the outside of the central passage, said dish is retained by the supports (12) of windings (62).

2. The stator (11) according to claim 1, in which the spurs (18) are radial.

3. The stator (11) according to claim 2, in which the spurs (18) have a flange (22).

4. The stator (11) according to claim 1, 2 or 3, in which the spurs (18) are on the supports (12) of windings (62) and the recesses (20) are on the dish (14).

5. The stator (11) according to one of claims 1 to 4, further comprising a ring (30) including on its periphery branches (32) extending radially toward the outside of the ring, the supports (12) of windings (62) being immobilized around the central passage by engagement of the branches through the supports of windings.

6. The stator (11) according to claim 5, further comprising an annular element (40) around the supports (12) of windings (62), the annular element comprising grooves into which the ends (42) of the branches (32) engage beyond the supports of windings.

7. A unit (52) comprising:
- a stator (11) according to one of claims 1 to 6;
- a frame (56) that is open around the stator;
- a rotor (50) arranged in the central passage of the stator.

8. The unit according to claim 7, further comprising a cartridge (50) in the stator (11) in which the rotor is located, and a seal (58) between the cartridge and the dish.

9. A pump for circulation of fluids comprising a unit (52) according to claim 7 or 8.

10. A method for assembling a stator (11) according to claim 1 comprising a step of joining , in translation along an axis, a dish (14) with supports (12) of windings (62) by joining members, in which the joining members (16) are spurs (18) on the supports of windings or on the dish, cooperating with recesses (20) on the other of said supports of windings or dish, so that, if the dish (14) is urged along the axis (10) towards the outside of the central passage, said dish is retained by the supports (12) of windings (62).

11. The method according to claim 10, in which the spurs (18) are radial.

12. The method according to claim 10 or 11, comprising the steps of:
- providing a ring (30) comprising branches (32) extending radially towards the outside of the ring;
- partial engagement of the branches through the supports (12) of windings (62), the step of joining the supports (12) of windings (62) with the dish (14) being performed by complete engagement of branches through the supports of windings.

13. The method according to claim 12, in which the step of joining the supports of windings (62) with the dish (14) is performed by complete engagement of the branches (32) through the supports (12) of windings (62) up until the spurs (18) are plugged into the recesses (20).

14. The method according to one of claims 10 to 13, further comprising a step of winding the supports (12) of windings (62) when the branches (32) are partially fitted into the supports of windings.
